# DEMANDE DE BREVET EUROPEEN

(11) **EP 1 522 217 A1**
(43) Date de publication de la demande: **13.04.2005**
(21) Numéro de dépôt: 04364063.0
(22) Date de dépôt: 05.10.2004
(51) Int. Cl.: A01J 9/00, A01K 9/00, A01J 9/08, G01F 11/02

(54) **Dispositif distributeur et doseur de lait pour veaux**

(30) Priorité: 07.10.2003 FR 0311709
(71) Demandeur: Duhamel, Gilbert, 53150 La Chapelle Rainsouin (FR)
(72) Inventeur: Duhamel, Gilbert, 53150 La Chapelle Rainsouin (FR)

(57) **Abrégé**

Dispositif pour collecter le lait des vaches dans une salle de traite de plein pied et de distribuer le lait dans la nurseries directement sur place aux veaux.

Il est constitué d'une petite citerne (1) installé sur un châssis (2) composé de 3 roues (3) pour transporter le lait aux veaux. Sur la partie haute, un couvercle (4) . Au centre du couvercle, (4) une tige (5), et un levier (6) par un mouvement de haut vers le bas actionne le piston (8) dans le corps de pompe (9), afin d'évacuer le lait, litre part litre à chaque veaux.

## Description

La présente invention concerne un appareil qui va remplacer les pots trayeurs dans une salle de traite pour vaches laitières. Traditionnellement les pots trayeurs sont d'une conception simple généralement et de forme conique, avec une contenance de vingt litres pour en limiter le poids.

Le dispositif selon l'invention possède un récipient vertical, de forme ronde et arrondie au deux extrémités de soixante litres ou cent litres, pour collecter le lait d'environ de trois vaches, afin d'emmener sur place la buvée aux jeunes veaux, matin et soir.

Ce système de récipient est constitué d'une petite citerne qui repose verticalement sur un châssis muni de roues de basse pression dont la roue avant centrale pivote sur elle-même pour faciliter les manoeuvres. Il est muni d'un système de pompe doseur, d'un levier positionné par rapport à son pivot, ¼ et ¾ pour le manche.

A la base de ce récipient et entre le châssis porteur, un tube cylindrique permet la fixation du récipient au châssis porteur.

Ce même tube cylindrique est dimensionné pour servir de corps de pompe manuel et d'assurer, par le mouvement d'un levier de haut en bas à la partie supérieur du récipient, un certain volume et de l'expulser par un bec verseur à chaque coup de piston. Le nombre de litre de lait nécessaire à chaque buvée individuelle, d'un veau matin et soir. Le levier est fixé sur le couvercle et à la fonction d'actionner la pompe doseuse à la partie basse du récipient, dans son corps de pompe et d'assurer le contrôle de distribuer un volume précis à chaque descente du levier, faisant évacuer le lait par le bec verseur.

Les dessins annexes illustrent l'invention.

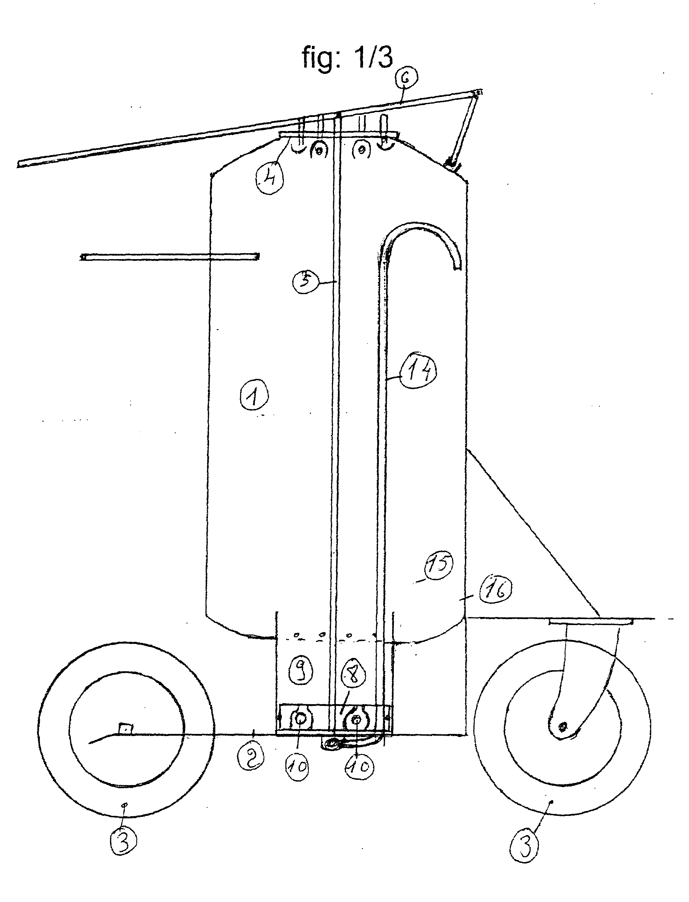

La figure 1 représente en coupe le dispositif de l'invention

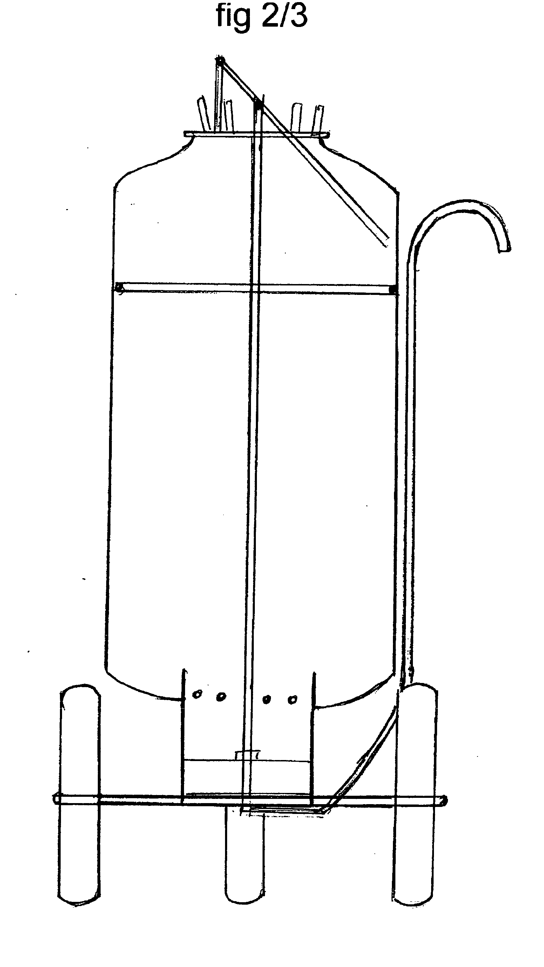

La figure 2 représente l'appareil vu de l'arrière.

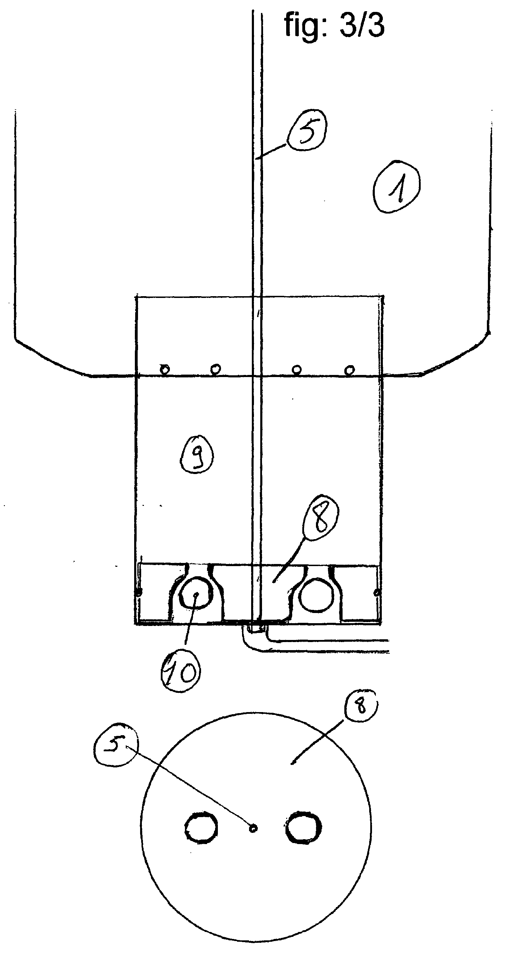

La figure 3 représente en coupe le corps de pompe, le piston et ces soupapes.

A l'intérieur de cette petite citerne (1) en inox, un tube cylindrique appelé corps de pompe (9), de l'ordre de 160 mm de diamètre et 8 cm de hauteur environ à l'intérieur, assurant le guidage du piston (8), dans son mouvement alternatif.

Ce tube de 8 cm à l'intérieur de cette petite citerne (1) à sa base est percée de trous sur son pourtour, (11) pour permettre à la totalité du lait de s'écouler dans le corps de pompe (9). De préférence les trous sont au nombre de huit et leurs diamètres est de l'ordre de 12 mm.

Ce corps de pompe possède une partie intérieur dans le récipient et une partie extérieur servant de volume et de support, fixé entre le châssis et le récipient.

Ce même tube dépasse le fond de la citerne inox (1), vers le bas de 15 cm venant s'appuyer sur un châssis roulant (12) équipé de roues (13). Ce tube posé verticalement assure le support de la citerne (1) à la verticale et sa deuxième fonction est de servir de corps de pompe (9) doseur d'un certain volume.

Pour évacuer le lait vers l'extérieur, il faut lever le levier (6) d'une main pour faire le plein du corps de la pompe (9), le lait tombe par gravité entre les soupapes (10) sous le piston (8). Au moment d'appuyer sur le levier (6) les soupapes (10) flottent et remontent dans le piston (8) bloquant ainsi le passage du lait. En forçant sur le levier (6), le piston (8) pousse le lait à l'extérieur par un tube en forme de bec verseur (14) dans le sceau a chaque veau.

De retour en laiterie, cet appareil est rincé et nettoyé à chaque traite. Ce même appareil est muni d'une résistance (15) et d'un thermostat (16) pour maintenir le lait à 37°.

## Revendications

1. Dispositif pour traire une vache dont le lait est réservé à nourrir les veaux, caractérisé en un appareil qui va remplacer les pots trayeurs par une petite citerne verticale posée sur un châssis à trois roues, muni d'un système de pompe doseur, et d'un levier positionné par rapport à son pivot.

2. Dispositif selon la revendication 1, **caractérisé en ce que** le levier est posé sur le couvercle et à la fonction d'actionner la pompe doseur à la partie basse du récipient, dans son corps de pompe, et, d'assurer le contrôle de distribuer un volume précis à chaque descente du levier faisant évacuer le lait par le bec verseur.

3. Dispositif selon la revendication 1, **caractérisé en ce que** la position du levier par rapport à la tige du piston est proportionnée à ¾ levier pour ¼ support.

4. Dispositif selon la revendication 1, **caractérisé en ce que** le corps de pompe possède une partie intérieure dans le récipient et une partie extérieure servant de volume et de support fixé entre le châssis et le récipient.

5. Dispositif selon l'une des quelconques des revendications, précédentes **caractérisées en ce que** le corps de pompe supérieur (8cm) dans le récipient est percé de trous sur son pourtour, pour permettre l'écoulement total du lait du récipient sous le piston lorsque celui-ci est élevé à la partie haute du corps de pompe.

6. Dispositif selon la revendication 5 **caractérisé en ce que** les trous sont au nombre de huit, leur diamètre étant de 12 mm.
